# EUROPEAN PATENT APPLICATION

(11) **EP 4 852 577 A1**
(43) Date of publication of application: **09.12.2026**
(21) Application number: 24920884.4
(22) Date of filing: 31.01.2024
(51) Int. Cl.: H04W 72/21

(54) **INFORMATION REPORTING METHOD AND APPARATUS, AND INFORMATION RECEIVING METHOD AND APPARATUS**

(71) Applicant: 1FINITY INC., Kawasaki-shi, Kanagawa 211-8588 (JP)
(72) Inventor: ZHANG, Jian, Beijing 100022 (CN); WANG, Guotong, Beijing 100022 (CN); ZHANG, Qun, Beijing 100022 (CN); ZHAO, Di, Beijing 100022 (CN); WANG, Xin, Beijing 100022 (CN); LI, Guorong, Beijing 100022 (CN)
(74) Representative: Haseltine Lake Kempner LLP
(86) International application number: PCT/CN2024/074954
(87) International publication number: WO 2025/160813

(57) **Abstract**

Embodiments of present disclosure provide an information reporting and receiving method and apparatus. The information receiving method includes: a terminal equipment receives configuration information used for configuring one or more event-triggered reports, the one or more event-triggered reports being associated with a scheduling request configuration or a RACH configuration; when an event-triggered report meets a triggering condition, transmits a scheduling request or a PRACH; receives downlink control information (DCI); and transmits event-triggered report on a PUSCH or a PUCCH indicated by the DCI, wherein the event-triggered report includes at least one of a report index, a measurement resource index, or a measurement result.

## Description

### Technical Field

Embodiments of the present disclosure relate to the field of communication technologies.

### Background

5G NR supports Channel State Information (CSI) reporting. For example, a CSI report may include at least one of a CSI-RS resource indicator (CRI), an SSB resource indicator (SSBRI), a L1-RSRP, or a L1-SINR, i.e., the CSI report may include beam-related reporting. A terminal equipment transmits a beam report to a network device, the network device may perform beam management accordingly, for example, indicate a better beam for the terminal equipment.

When a terminal equipment transmits a CSI report is determined by a network device. The network device may configure a periodic CSI report, such that the terminal equipment transmits a CSI report periodically. The network device may also configure a semi-persistent CSI report, the terminal equipment transmits a CSI report periodically after the semi-persistent CSI report is activated by the network device. The network device may also configure an aperiodic CSI report, the terminal equipment transmits a CSI report once after the aperiodic CSI report is triggered by the network device. The CSI report includes a measurement result for a serving cell.

Rel-17 adds a support for ICBM (Inter Cell Beam Management). In the ICBM, the CSI report may include a measurement result for a non-serving cell, such that the network device may indicate that the terminal equipment uses a beam of the non-serving cell, however, the terminal equipment does not switch to the non-serving cell.

Rel-18 adds a support for an LTM CSI report. The Rel-18 supports LTM (L1/L2 Triggered Mobility). In the LTM, a terminal equipment may transmit the LTM CSI report. The LTM CSI report of the Rel-18 includes an SSBRI and L1-RSRP. Unlike the legacy CSI report mentioned above, the LTM CSI report includes a measurement result for a candidate cell. A network device may determine a beam used in the candidate cell for the terminal equipment accordingly, and indicate the beam to the terminal equipment before switching to the candidate cell, such that the terminal equipment is able to quickly apply an appropriate beam for data transmission after switching. In other words, in the LTM, the terminal equipment switches to the candidate cell and uses the beam of the candidate cell after switching. Similarly, the terminal equipment may transmit the LTM CSI report in a periodic, semi-persistent, or aperiodic manner.

It should be noted that the above introduction to the background is merely provided for clear and complete explanation of technical solutions of the present disclosure and for easy understanding by those skilled in the art. And it should not be understood that these technical solutions are known to those skilled in the art only because they are described in the background of the present disclosure.

### Summary

The inventors found that an event-triggered report would be introduced in an upcoming Rel-19 release. More specifically, a further enhancement would be introduced to a CSI report and an LTM CSI report, that is, supporting for an event-triggered CSI report and an event-triggered LTM CSI report. The event-triggered CSI report and the event-triggered LTM CSI report correspond to legacy CSI and LTM CSI reports, respectively.

Unlike the legacy report mentioned above, for an event-triggered report, when a terminal equipment transmits the report is determined by the terminal equipment, i.e., triggered by an event. In other words, the terminal equipment only transmits a report when necessary, such that the report is transmitted in a more timely manner. Furthermore, reporting overhead may be reduced, since unnecessary reporting is avoided. How to support the event-triggered CSI report and the event-triggered LTM CSI report is a problem to be solved as needed. Currently, 3GPP has just approved a Rel-19 project and has not yet started discussion of technical details.

In view of at least one of the above problems, embodiments of the present disclosure provide an information reporting method and apparatus.

According to one aspect of the embodiments of the present disclosure, there is provided an information reporting method, including:
receiving, by a terminal equipment, configuration information used for configuring one or more event-triggered reports, the one or more event-triggered reports being associated with a scheduling request configuration or a RACH configuration; and
transmitting, by the terminal equipment, a scheduling request or a PRACH when an event-triggered report meets a triggering condition;
receiving, by the terminal equipment, downlink control information (DCI); and
transmitting, by the terminal equipment, the event-triggered report on a PUSCH or a PUCCH indicated by the downlink control information (DCI), wherein the event-triggered report includes at least one of a report index, a measurement resource index, or a measurement result.

According to another aspect of the embodiments of the present disclosure, there is provided an information reporting apparatus, including:
a receiving unit configured to receive configuration information used for configuring one or more event-triggered reports, the one or more event-triggered reports being associated with a scheduling request configuration or a RACH configuration; and
a transmitting unit configured to transmit a scheduling request or a PRACH when an event-triggered report meets a triggering condition;
wherein the receiving unit further receives downlink control information (DCI); and
the transmitting unit further transmits the event-triggered report on a PUSCH or a PUCCH indicated by the downlink control information (DCI), wherein the event-triggered report includes at least one of a report index, a measurement resource index, or a measurement result.

According to another aspect of the embodiments of the present disclosure, there is provided an information reporting method, including:
receiving, by a terminal equipment, configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration;
transmitting, by the terminal equipment, a scheduling request or a PRACH according to a scheduling request configuration or a RACH configuration associated with the event-triggered report when an event-triggered report meets a triggering condition;
receiving, by the terminal equipment, downlink control information (DCI); and
transmitting, by the terminal equipment, the event-triggered report on a PUSCH or a PUCCH indicated by the downlink control information (DCI), wherein the event-triggered report includes at least one of a measurement resource index or a measurement result.

According to another aspect of the embodiments of the present disclosure, there is provided an information reporting apparatus, including:
a receiving unit configured to receive configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration;
a transmitting unit configured to transmit a scheduling request or a PRACH according to a scheduling request configuration or a RACH configuration associated with the event-triggered report when an event-triggered report meets a triggering condition;
wherein the receiving unit further receives downlink control information (DCI); and
the transmitting unit further transmits the event-triggered report on a PUSCH or a PUCCH indicated by the downlink control information (DCI), wherein the event-triggered report includes at least one of a measurement resource index or a measurement result.

According to another aspect of the embodiments of the present disclosure, there is provided an information reporting method, including:
receiving, by a terminal equipment, configuration information used for configuring one or more event-triggered reports, wherein a first number of event-triggered reports are associated with a first scheduling request configuration or RACH configuration, and a second number of event-triggered reports are associated with a second scheduling request configuration or RACH configuration;
transmitting, by the terminal equipment, a scheduling request or a PRACH according to a scheduling request configuration or a RACH configuration associated with the event-triggered report when an event-triggered report meets a triggering condition;
receiving, by the terminal equipment, downlink control information (DCI); and
transmitting, by the terminal equipment, the event-triggered report on a PUSCH or a PUCCH indicated by the downlink control information (DCI), wherein the event-triggered report includes at least one of a report index, a measurement resource index, or a measurement result.

According to another aspect of the embodiments of the present disclosure, there is provided an information reporting apparatus, including:
a receiving unit configured to receive configuration information used for configuring one or more event-triggered reports, wherein a first number of event-triggered reports are associated with a first scheduling request configuration or RACH configuration, and a second number of event-triggered reports are associated with a second scheduling request configuration or RACH configuration;
a transmitting unit configured to transmit a scheduling request or a PRACH according to a scheduling request configuration or a RACH configuration associated with the event-triggered report when an event-triggered report meets a triggering condition;
wherein the receiving unit further receives downlink control information (DCI); and
the transmitting unit further transmits the event-triggered report on a PUSCH or a PUCCH indicated by the downlink control information (DCI), wherein the event-triggered report includes at least one of a report index, a measurement resource index, or a measurement result.

One of advantageous effects of the embodiments of the present disclosure is that a terminal equipment is able to quickly transmit an event-triggered report after an event occurs, therefore, timeliness of reporting is improved and reporting overhead is reduced.

With reference to the following description and drawings, particular embodiments of the present disclosure are disclosed in detail, and the manners in which the principle of the present disclosure may be used are indicated. It should be understood that the scope of the embodiments of the present disclosure is not limited thereto. The embodiments of the present disclosure contain a plurality of alternations, amendments and equivalents within the spirit and the scope of the terms of the appended claims.

Features that are described and/or illustrated with respect to one embodiment may be used in a same way or in a similar way in one or more other embodiments, in combination with or instead of the features of the other embodiments.

It should be emphasized that the term "comprise/include" when used herein refers to the presence of features, integers, steps or components, but does not preclude the presence or addition of one or more other features, integers, steps or components.

### Brief Description of the Drawings

Elements and features depicted in one drawing or embodiment of the present disclosure may be combined with elements and features depicted in one or more additional drawings or embodiments. Moreover, in the drawings, similar reference numerals designate corresponding parts throughout multiple drawings and may be used to designate like or similar parts in more than one embodiment.
FIG. 1 is a schematic diagram illustrating a communication system according to the embodiments of the present disclosure;
FIG. 2 is a schematic diagram illustrating an information reporting method according to the embodiments of the present disclosure;
FIG. 3 is an example diagram illustrating a relationship among a scheduling request configuration, events, and reports according to the embodiments of the present disclosure;
FIG. 4 is a sequence diagram illustrating information reporting according to the embodiments of the present disclosure;
FIG. 5 is an example diagram illustrating an event-triggered report according to the embodiments of the present disclosure;
FIG. 6 is an example diagram illustrating a relationship between a CSI request and a trigger state according to the embodiments of the present disclosure;
FIG. 7 is another example diagram illustrating the event-triggered report according to the embodiments of the present disclosure;
FIG. 8 is another example diagram illustrating the event-triggered report according to the embodiments of the present disclosure;
FIG. 9 is another example diagram illustrating the event-triggered report according to the embodiments of the present disclosure;
FIG. 10 is a schematic diagram illustrating an information reporting method according to the embodiments of the present disclosure;
FIG. 11 is an example diagram illustrating a relationship among a scheduling request configuration, events, and reports according to the embodiments of the present disclosure;
FIG. 12 is an example diagram illustrating a relationship between a CSI request and a trigger state according to the embodiments of the present disclosure;
FIG. 13 is an example diagram illustrating an event-triggered report according to the embodiments of the present disclosure;
FIG. 14 is another example diagram illustrating the event-triggered report according to the embodiments of the present disclosure;
FIG. 15 is a schematic diagram illustrating an information reporting method according to the embodiments of the present disclosure;
FIG. 16 is an example diagram illustrating a relationship among a scheduling request configuration, events, and reports according to the embodiments of the present disclosure;
FIG. 17 is a schematic diagram illustrating an information receiving method according to the embodiments of the present disclosure;
FIG. 18 is a schematic diagram illustrating an information reporting apparatus according to the embodiments of the present disclosure;
FIG. 19 is a schematic diagram illustrating an information receiving apparatus according to the embodiments of the present disclosure;
FIG. 20 is a schematic diagram illustrating a terminal equipment according to the embodiments of the present disclosure; and
FIG. 21 is a schematic diagram illustrating a network device according to the embodiments of the present disclosure.

### Detailed Description

The above and other features of the present disclosure will be apparent with reference to the following description and drawings. In the description and drawings, particular embodiments of the present disclosure have been disclosed in detail as being indicative of some of the embodiments in which the principles of the present disclosure may be employed, however, it should be understood that the present disclosure is not limited to the embodiments described herein. Rather, the present disclosure includes all amendments, variants and equivalents falling within the scope of the appended claims.

In embodiments of the present disclosure, terms "first", "second", etc. are used to differentiate different elements with respect to names, and do not indicate spatial arrangement or temporal orders of these elements, and these elements should not be limited by these terms. Terms "and/or" include any one and all combinations of one or more relevantly listed terms. Terms "comprising", "including", "having" refer to presence of stated features, elements, components, or assemblies, but do not exclude presence or addition of one or more other features, elements, components, or assemblies.

In embodiments of the present disclosure, singular forms "a", "the", etc., include plural forms, and should be understood as "a kind of" or "a type of" in a broad sense, but should not be limited to a meaning of "one"; and the term "the" should be understood as including both a singular form and a plural form, except clearly specified otherwise. Furthermore, the term "according to" should be understood as "at least partially according to......", the term "based on" should be understood as "at least partially based on......", except clearly specified otherwise.

In embodiments of the present disclosure, the term "communication network" or "wireless communication network" may refer to a network satisfying any one of communication standards, such as Long Term Evolution (LTE), Long Term Evolution-Advanced (LTE-A), Wideband Code Division Multiple Access (WCDMA), and High-Speed Packet Access (HSPA), etc.

Furthermore, communication between devices in a communication system may be performed according to communication protocols at any stage, which may, for example, include but not limited to the communication protocols: 1G (generation), 2G, 2.5G, 2.75G, 3G, 4G, 4.5G, and 5G, New Radio (NR) and 6G in the future, etc., and/or other communication protocols that are currently known or will be developed in the future.

In embodiments of the present disclosure, the term "network device", for example, refers to a device in a communication system that accesses a terminal equipment to a communication network and provides services for the terminal equipment. The network device may include but not limited to devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), an IAB host, etc. Furthermore, the base station may include a remote radio head (RRH), a remote radio unit (RRU), a relay, or a low-power node (such as a femto, and a pico, etc.). And the term "base station" may include some or all of its functions, and each base station may provide communication coverage for a specific geographic area. And a term "cell" may refer to a base station and/or its coverage area, depending on a context in which the term is used.

In embodiments of the present disclosure, the term "user equipment" (UE) or "terminal equipment or terminal device" (TE) refers to, for example, an equipment accessing to a communication network and receiving network services via a network device. The terminal equipment may be fixed or mobile, and may also be referred to as a mobile station (MS), a terminal, a subscriber station (SS), an access terminal (AT), a station, etc.

The terminal equipment may include but not limited to devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, the terminal equipment may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or include one or more network devices described above. The term "user side" or "terminal side" or "terminal equipment side" refers to a side of a user or a terminal, which may be a UE, or may include one or more terminal equipments described above. "A device" in this text may refer to a network device, and may also refer to a terminal equipment, except otherwise specified.

Scenarios of embodiments in the present disclosure shall be described below by way of examples. However, the present disclosure is not limited thereto.

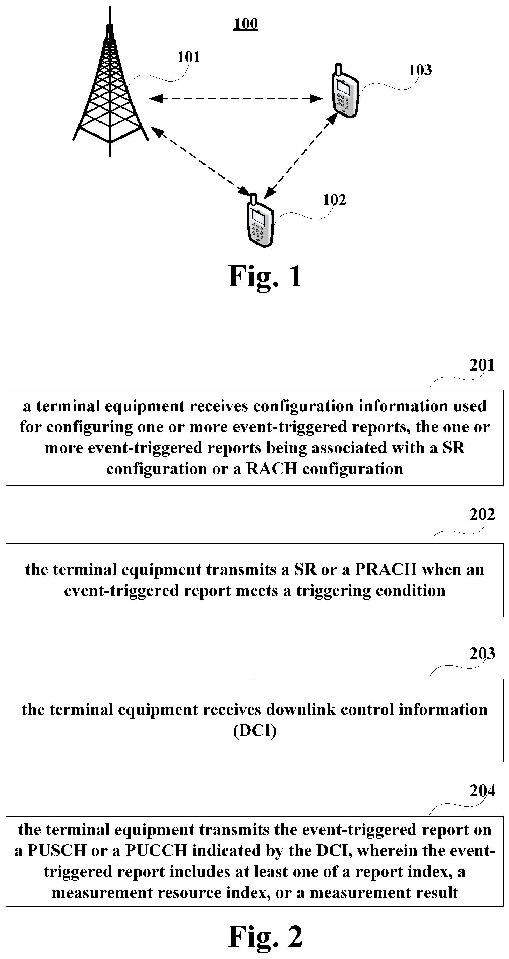

FIG. 1 is a schematic diagram illustrating a communication system according to the embodiments of the present disclosure, which schematically illustrates a situation in which a terminal equipment and a network device are used as an example. As illustrated in the FIG. 1, a communication system 100 may include a network device 101 and terminal equipments 102 and 103. For the sake of simplicity, the FIG. 1 only illustrates two terminal equipments and one network device as an example, however, the embodiments of the present disclosure are not limited thereto.

In embodiments of the present disclosure, existing services or services that may be implemented in the future may be transmitted between the network device 101 and the terminal equipments 102 and 103. For example, these services may include but are not limited to: an enhanced Mobile Broadband (eMBB), a massive Machine Type Communication (mMTC), and an Ultra-Reliable and Low Latency Communication (URLLC), etc.

It should be noted that the FIG. 1 illustrates that both the terminal equipments 102 and 103 fall within coverage of the network device 101, however, the present disclosure is not limited thereto. Both the terminal equipments 102 and 103 may not fall within the coverage of the network device 101, or one terminal equipment 102 falls within the coverage of the network device 101 and the other terminal equipment 103 falls out of the coverage of the network device 101.

In embodiments of the present disclosure, higher layer signaling may be, for example, radio resource control (RRC) signaling; for example, an RRC message, including, for example, a MIB, system information, a dedicated RRC message; or an RRC IE (RRC information element). The signaling may also be, for example, MAC (Medium Access Control) signaling; or a MAC CE (MAC control element). However, the present disclosure is not limited thereto.

In the following description, terms "PDCCH" and "physical downlink control channel" or "downlink control information" are interchangeable, and terms "PDSCH" and "physical downlink data channel" or "downlink data" are also interchangeable without confusion. In addition, transmitting or receiving a PDCCH may be understood as transmitting or receiving downlink control information carried by the PDCCH; and transmitting or receiving a PDSCH may be understood as transmitting or receiving downlink data carried by the PDSCH.

Terms "PUCCH" and "physical uplink control channel" or "uplink control information" are interchangeable, and terms "PUSCH" and "physical uplink data channel" or "uplink data" are also interchangeable. In addition, transmitting or receiving a PUCCH may be understood as transmitting or receiving downlink control information carried by the PUCCH; and transmitting or receiving a PUSCH may be understood as transmitting or receiving downlink data carried by the PUSCH.

Terms "PRACH" and "physical random access channel" or "random access information" are interchangeable. In addition, transmitting or receiving a PRACH may be understood as transmitting or receiving random access information carried by the PRACH. In embodiments of the present disclosure, terms "indication", "activation", and "trigger" are interchangeable, or two or more of terms "indication", "activation", and "trigger" may be combined together.

In embodiments of the present disclosure, one of problems that need to be solved is how to support an event-triggered CSI report and an event-triggered LTM CSI report. More specifically, how a terminal equipment transmits an event-triggered report after an event occurs is a problem to be solved as needed, including a program of transmitting an event-triggered report, a container carrying an event-triggered report, and content(s) included in an event-triggered report.

### Embodiments of a First Aspect

Embodiments of the present disclosure provide an information reporting method. FIG. 2 is a schematic diagram illustrating an information reporting method according to the embodiments of the present disclosure. As illustrated in the FIG. 2, the method includes:
201: a terminal equipment receives configuration information used for configuring one or more event-triggered reports, the one or more event-triggered reports being associated with a scheduling request (SR) configuration or a random access channel (RACH) configuration;
202: the terminal equipment transmits a scheduling request or a physical random access channel (PRACH) when an event-triggered report meets a triggering condition;
203: the terminal equipment receives downlink control information (DCI); and
204: the terminal equipment transmits the event-triggered report on a PUSCH or a PUCCH indicated by the downlink control information (DCI), wherein the event-triggered report includes at least one of a report index, a measurement resource index, or a measurement result.

In embodiments of the present disclosure, "an event-triggered report" is also referred to as "a report triggered by an event".

In embodiments of the present disclosure, "event triggered" may be replaced with "UE initiated" or "event driven".

It should be noted that the FIG. 2 only schematically illustrates the embodiments of the present disclosure, however, the present disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 2.

In some embodiments, the event-triggered report further includes at least one of an event index, the number of measurement resource indexes, the number of measurement results, or a measurement resource set index. The present disclosure is not limited thereto, and for example, other information may also be included.

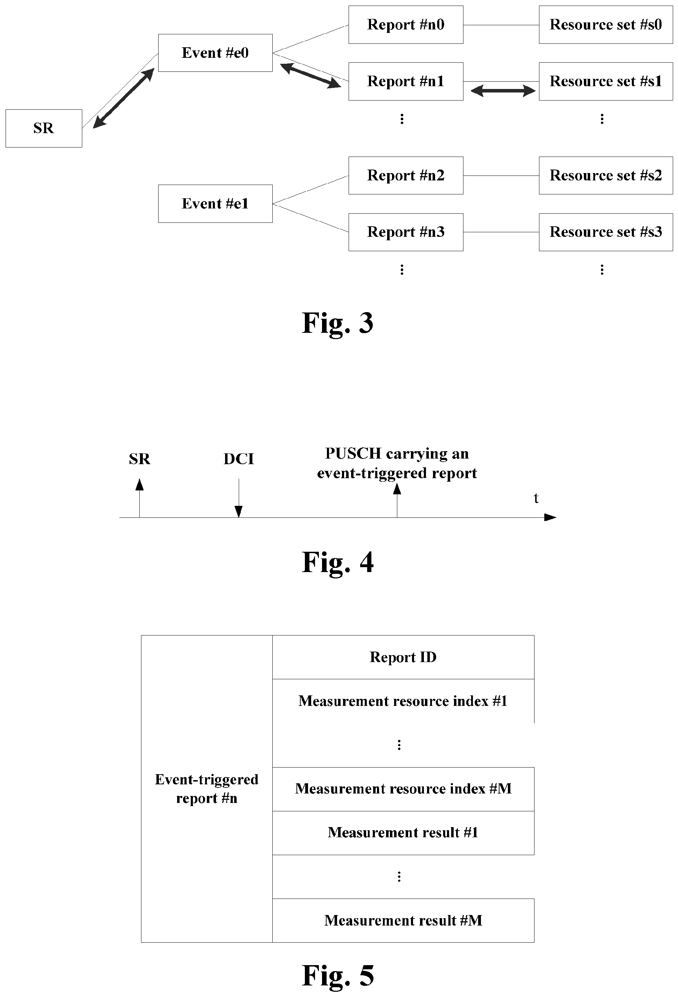

FIG. 3 is an example diagram illustrating a relationship among a scheduling request configuration, events, and reports according to the embodiments of the present disclosure. A term "report" in the figure refers to "an event-triggered report". As illustrated in the FIG. 3, for example, a terminal equipment may be configured with a plurality of event-triggered reports (e.g., by being configured with a plurality of event-triggered report configurations), each event-triggered report may be associated with a measurement resource set (e.g., by associating a measurement resource configuration for each event-triggered report configuration), a plurality of event-triggered reports may be associated with one or more events, and all event-triggered reports share one scheduling request (SR) configuration.

When a triggering condition of any event-triggered report (such as a report #n1 in the FIG. 3) is met, a terminal equipment transmits a SR according to the SR configuration (for example, selects a resource from a plurality of candidate resources available for SR transmission to transmit the SR). In short, a dedicated SR is used for an event-triggered report, and any event-triggered report may trigger the SR.

For example, all event-triggered reports are associated with a same SR ID (for example, a corresponding RRC IE is represented as a SchedulingRequestId), thereby associating a SR configuration corresponding to the SchedulingRequestId. The SR configuration includes necessary information for SR. The SR configuration may include a plurality of RRC IEs, such as SchedulingRequestResourceConfig and SchedulingRequestToAddMod (reference may be made to related technologies of TS 38.331 for a detailed definition of the RRC IE).

Table 1 shows an example of associating with an event-triggered report. For example, as shown in the Table 1, SRs used for all event-triggered reports are configured by schedulingRequestID-Event-Triggered, and the schedulingRequestID-Event-Triggered is associated with a SchedulingRequestId.

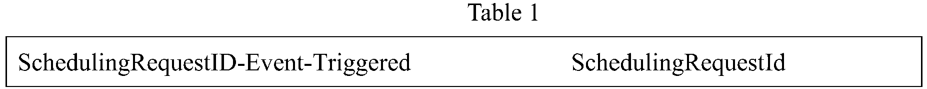

Table 2 shows another example of associating with an event-triggered report. For example, as shown in the Table 2, each event-triggered report configuration (Event-Triggered-CSI-ReportConfig) is associated with a same SchedulingRequestId.

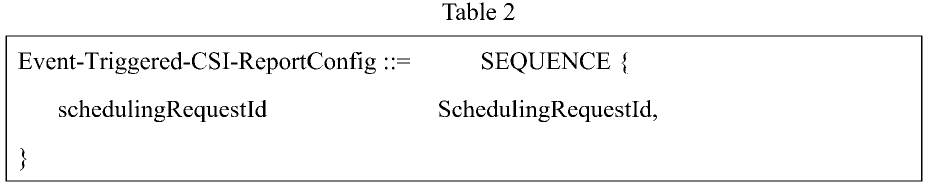

FIG. 4 is a sequence diagram illustrating information reporting according to the embodiments of the present disclosure. As illustrated in the FIG. 4, after receiving a SR, a network device is able to know that a terminal equipment has an event-triggered report that needs to be transmitted, thus transmits DCI to schedule a PUSCH, such that the terminal equipment is able to transmit the event-triggered report via the PUSCH. From a perspective of the terminal equipment, the terminal equipment receives the DCI after transmitting the SR and transmits the event-triggered report on the PUSCH scheduled by the DCI.

For example, an event-triggered report may include a measurement resource index, the measurement resource index is an index defined within a measurement resource set associated with the event-triggered report. In other words, the measurement resource index is an index of a measurement resource within the measurement resource set, for example, the measurement resource index is an SSBRI (SSB Resource Indicator) or a CRI (CSI-RS Resource Indicator).

For example, an event-triggered report may include a measurement result, and the measurement result is at least one of L1-RSRP, L1-SINR, filtered RSRP, or filtered SINR.

For example, an event-triggered report may include a report index (such as a report #n1 in the FIG. 3). Since a plurality of event-triggered reports share a same SR configuration, a network device is not able to know which event-triggered report a terminal equipment wants to transmit after receiving SR, thus the terminal equipment may notify the network device of this information by reporting the report index. In addition, since a measurement resource index may be an index defined within a measurement resource set (for example, the measurement resource index is an SSBRI or a CRI), by reporting the report index, the network device may know which event-triggered report the terminal equipment transmits, and then know a measurement resource set associated with the event-triggered report, so as to correctly interpret the measurement resource index.

For example, an event-triggered report may include a measurement resource set index (such as a measurement resource set #s1 in the FIG. 3). Since the measurement resource index may be an index defined within a measurement resource set (e.g., the measurement resource index is an SSBRI or a CRI), the network device may correctly interpret the measurement resource index by reporting of the measurement resource set index.

For example, the number of measurement results is equal to the number of measurement resource indexes, is equal to M (the number of measurement results and the number of measurement resource indexes share a one-to-one mapping relationship), and the event-triggered report may include M. For example, when M is determined by a terminal equipment independently, the event-triggered report includes M. Since M is determined by the terminal equipment, a network device is unaware of a value of M and is unable to correctly decode encoded information including M measurement results and M measurement resource indexes. Therefore, the terminal equipment is enabled to report M. The network device may first obtain the value of M through one demodulation and decoding, and then obtain specific information of the M measurement results and the M measurement resource indexes through another demodulation and decoding based on the known M.

For example, a plurality of types of events are defined for event-triggered reports. The event-triggered report may include an event index (such as an event #e0 in the FIG. 3) to notify a network device of an event type. For example, in the FIG. 3, the event #e0 involves that a terminal equipment finds a new beam with RSRP higher than a currently used beam by a value, and an event #e1 involves that a terminal equipment finds a new beam with RSRP higher than a currently used beam by a value, and RSRP of the currently used beam is less than a threshold.

FIG. 5 is an example diagram illustrating an event-triggered report according to the embodiments of the present disclosure. For example, as illustrated in the FIG. 5, an event-triggered report includes a report index (report ID in the figure), M measurement resource indexes, and M measurement results. A mapping order may be as illustrated in the FIG. 5. Differential reporting may be used for measurement results. For example, a measurement result #1 (absolute value) is quantized using N1 bits, and other measurement results (differential values) are differentially quantized using N2 bits (N2 < N1). Reference may be made to the related arts for more details on differential reporting.

In some embodiments, the event-triggered report is transmitted on the PUSCH or the PUCCH via uplink control information (UCI), or the event-triggered report is transmitted on the PUSCH via a MAC-CE.

For example, an event-triggered report as UCI is transmitted on a PUSCH. A terminal equipment may adopt an existing UCI multiplexing method to transmit the UCI via the PUSCH. The PUSCH may carry a UL-SCH (for example, corresponding to a case where a UL-SCH indicator field in DCI indicates "1"), or not carry a UL-SCH (for example, corresponding to a case where a UL-SCH indicator field in DCI indicates "0"). Reference may be made to the related arts for more details on UCI multiplexing.

In some embodiments, the report index is an event-triggered report configuration ID, or the report index is an ID corresponding to configured one or more event-triggered reports.

For example, a report index is an event-triggered report configuration ID. A terminal equipment is configured with a plurality of event-triggered report configurations, and thus configured with a plurality of event-triggered reports. The event-triggered report configuration ID may uniquely identify an event-triggered report, thus a report index may be the event-triggered report configuration ID. For example, the event-triggered report configuration ID may reuse an existing report configuration ID (CSI-ReportConfigId), or may be a newly defined report configuration ID (such as Event-Triggered-CSI-ReportConfigId). For example, a value range of the event-triggered report configuration ID is [0, X-1], then the number of bits (bit width) required for the report index is $\left⌈{log}_{2} X\right⌉$.

For example, a report index is an ID within a range of configured one or more event-triggered reports. Although a value range of an event-triggered report configuration ID is [0, X-1] (i.e., up to X event-triggered reports may be configured), if a terminal equipment is only configured with Y (Y < X) event-triggered reports (i.e., only Y event-triggered report configuration IDs are actually configured for the terminal equipment), the number of bits required for the report index is $\left⌈{log}_{2} Y\right⌉$, instead of $\left⌈{log}_{2} X\right⌉$. The report index is an ID within the Y event-triggered reports.

Similarly, a measurement resource set index is a measurement resource set configuration ID, or a measurement resource set index is an ID of one or more configured measurement resource sets.

In some embodiments, the terminal equipment determines to transmit the event-triggered report according to at least one of a field included in the downlink control information (DCI), a format of the downlink control information (DCI), or information indicated by the downlink control information (DCI).

For example, DCI in existing standards may schedule a PUSCH transmission, or may trigger an aperiodic CSI report, or may trigger an aperiodic LTM CSI report. DCI in embodiments of the present disclosure may trigger or schedule an event-triggered report. A terminal equipment needs to distinguish in some way which of the above purposes the DCI is used for.

For example, when a value of one or more fields of DCI is a predefined special value, it indicates that the DCI is used for scheduling an event-triggered report; otherwise, the DCI is not used for scheduling the event-triggered report. In this case, a terminal equipment determines that the DCI is used for scheduling a PUSCH transmission, or triggering an aperiodic CSI report, or triggering an aperiodic LTM CSI report according to an existing standard method; one or more fields may be existing fields and/or newly defined fields. For example, a DCI format Z1 indicates that the DCI is used for scheduling an event-triggered report, and a DCI format Z2 indicates that the DCI is not used for scheduling an event-triggered report. For example, the DCI indicates one information among a plurality of information configured in RRC signaling. When the DCI indicates first information, it indicates that the DCI is used for scheduling an event-triggered report. When the DCI indicates second information, it indicates that the DCI is not used for scheduling an event-triggered report.

In some embodiments, a CSI request field in the downlink control information (DCI) indicates a dedicated trigger state of an event-triggered report, and the terminal equipment determines to transmit the event-triggered report according to the trigger state.

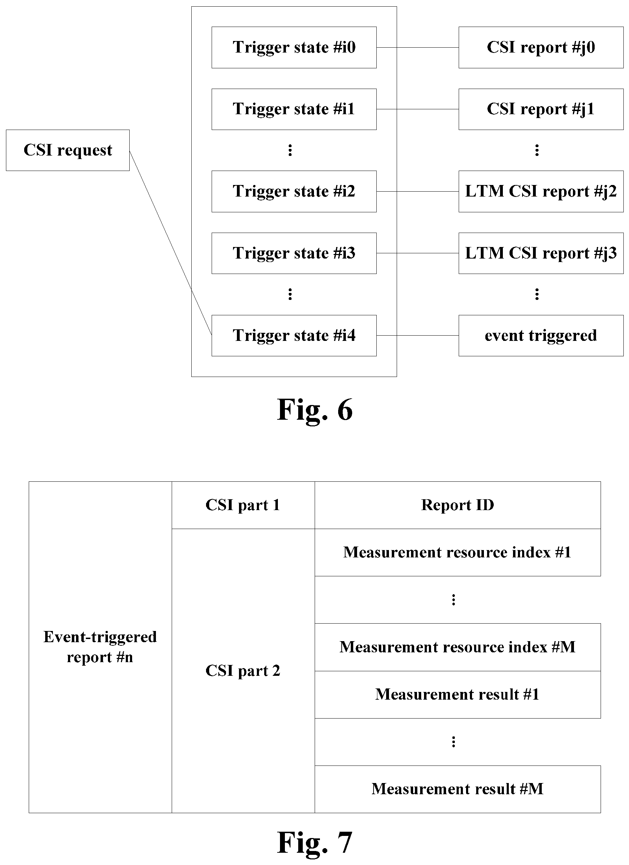

FIG. 6 is an example diagram illustrating a relationship between a CSI request and a trigger state according to the embodiments of the present disclosure. For example, as illustrated in the FIG. 6, a terminal equipment is configured with one or more trigger states (CSI-AperiodicTriggerState), one of which (trigger state #i4) is used to trigger an event-triggered report (trigger state #i4 is labeled as "event triggered"). When a CSI request field in DCI indicates this trigger state, the terminal equipment transmits an event-triggered report on a PUSCH scheduled by the DCI.

Optionally, the terminal equipment may also be configured with a trigger state (trigger state #10, trigger state #il) for triggering an aperiodic CSI report, and/or a trigger state (trigger state #i2, trigger state #i3) for triggering an aperiodic LTM CSI report. Different codepoints of the CSI request field correspond to different trigger states. Therefore, the CSI request field may trigger an aperiodic CSI report, an aperiodic LTM CSI report, or an event-triggered report. The terminal equipment may determine which type of report is triggered by the CSI request field according to a RRC IE associated with the trigger state.

Table 3 shows an example of an RRC IE, which shows a trigger state for triggering an aperiodic CSI report.

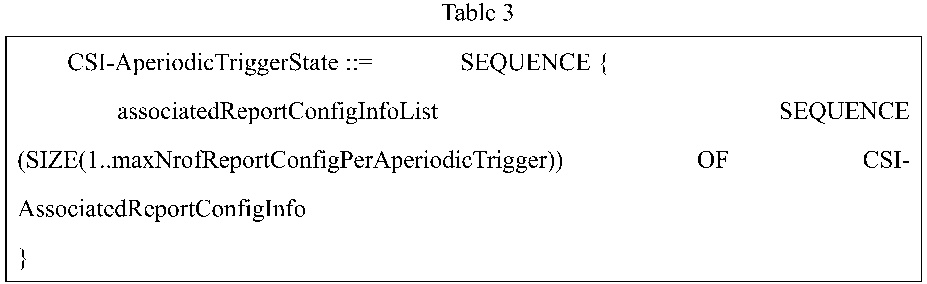

Table 4 shows another example of the RRC IE, which shows a trigger state for triggering an aperiodic LTM CSI report.

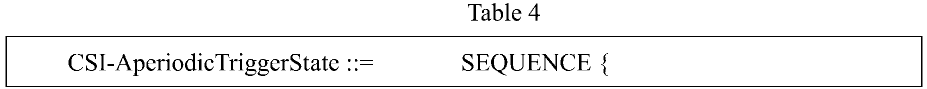

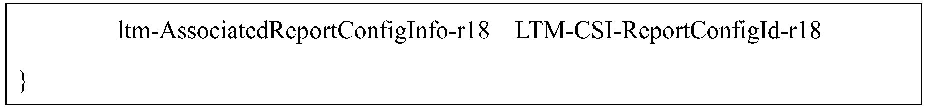

Table 5 shows another example of the RRC IE, which shows a trigger state for triggering an event-triggered report.

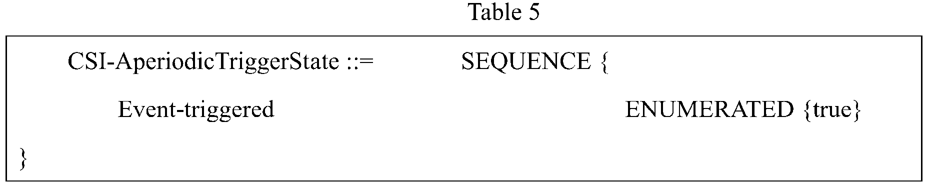

For example, the Table 5 shows a dedicated trigger state of an event-triggered report, and such an Event-triggered sub-RRC IE labels the dedicated trigger state of an event-triggered report. A CSI request field indicates a CSI-AperiodicTriggerState. Since sub-RRC IEs of different types of the CSI-AperiodicTriggerState are different, the terminal equipment may determine whether the CSI request field triggers an aperiodic CSI report, an aperiodic LTM CSI report, or an event-triggered report according to the sub-RRC IE of the CSI-AperiodicTriggerState.

Therefore, DCI may flexibly indicate which type of report to trigger. Since the CSI request field in the DCI is reused, the DCI may trigger both a legacy report and an event-triggered report without increasing any DCI overhead.

In some embodiments, the number of measurement resource indexes or the number of measurement results included in different event-triggered reports is the same.

For example, each event-triggered report includes M measurement resource indexes and M measurement results. The same M value facilitates demodulation and decoding for a network device. For example, when an event-triggered report is used as UCI, UCI sizes of different event-triggered reports are the same, and a network device may demodulate and decode the UCI in a unified manner. When an event-triggered report is used as UCI, the event-triggered report may use the report format illustrated in the FIG. 5. For example, "the number of measurement resource indexes or the number of measurement results" may be replaced with "the bit width of the measurement resource index".

In some embodiments, the number of the measurement resource indexes or the number of the measurement results is configured per terminal equipment, or the number of the measurement resource indexes or the number of the measurement results is predefined.

For example, each event-triggered report includes M measurement resource indexes and M measurement results, where M is configured per UE or predefined. Therefore, when an event-triggered report is used as UCI, a network device knows a size of the UCI in advance and may thus demodulate and decode the UCI. For example, "the number of measurement resource indexes or the number of measurement results" may be replaced with "the bit width of the measurement resource index".

In some embodiments, the number of measurement resource indexes or the number of measurement results included in different event-triggered reports are independent.

For example, an event-triggered report includes M measurement resource indexes and M measurement results, and M values for different event-triggered reports are independent. In other words, the M values for the different event-triggered reports may be the same or different. The independent M values facilitate more flexible event-triggered reports. For example, the number of preferred measurement results included in different event-triggered reports may not be the same. For example, "the number of measurement resource indexes or the number of measurement results" may be replaced with "the bit width of the measurement resource index".

In some embodiments, the number of the measurement resource indexes or the number of the measurement results is configured per event-triggered report or is determined by the terminal equipment.

For example, an event-triggered report includes M measurement resource indexes and M measurement results, where M is configured per event-triggered report. For example, M is configured in an event-triggered report configuration. For example, "the number of measurement resource indexes or the number of measurement results" may be replaced with "the bit width of the measurement resource index".

In some embodiments, the event-triggered report includes a CSI part 1 and a CSI part 2; the CSI part 1 includes at least one of a report index, a first set of measurement resource indexes, or a first set of measurement results, and the CSI part 2 includes at least one of a second set of measurement resource indexes or a second set of measurement results.

In some embodiments, the event-triggered report includes a CSI part 1 and a CSI part 2; the CSI part 1 includes a report index, and the CSI part 2 includes at least one of a measurement resource index or a measurement result.

FIG. 7 is another example diagram illustrating the event-triggered report according to the embodiments of the present disclosure. For example, as illustrated in the FIG. 7, an event-triggered report is used as UCI. The event-triggered report includes a report index, M measurement resource indexes, and M measurement results. The report index is included in a CSI part 1, while M measurement resource indexes and M measurement results are included in a CSI part 2. M is configured in an event-triggered report configuration or is configured per terminal equipment.

The UCI size (the number of bits included in the UCI) depends on the number of fields and the number of bits in each field included in the UCI. The UCI size of different event-triggered reports may be different. Although a quantization method and the number of quantization bits of a measurement result may be the same for different event-triggered reports, the value of M and/or the bit width of the resource index may be different with respect to different event-triggered reports. The M may affect the number of fields included in the UCI, and the bit width of the resource index may affect the number of bits of the field, thus both the M and the bit width of the resource index may affect the size of the UCI. Since the M, which may affect the UCI size, is independently configured per event-triggered report, and a network device is unable to know which event-triggered report is transmitted according to a SR, the network device is unable to know the size of the UCI in advance, and thus is unable to demodulate and decode the UCI as a whole. In addition, the bit width of the measurement resource index also affects the UCI size. The bit width of the measurement resource index in different event-triggered reports may be different (for example, the bit width of the measurement resource index is $\left⌈{log}_{2} K\right⌉$, where K is the number of measurement resources included in the measurement resource set. The K value of the measurement resource set associated with different event-triggered reports may be different, thus the bit width of the measurement resource index in different event-triggered reports is different, such that the UCI size of different event-triggered reports is different. The network device is unable to know which event-triggered report is transmitted according to the SR, thus the network device is unable to know the bit width of the measurement resource index in advance, and is unable to know the size of the UCI.

The above problem may be solved by dividing the UCI into two parts, i.e., a CSI Part 1 and a CSI Part 2. As for the CSI Part 1 and the CSI Part 2 constituting the UCI, the size of the CSI Part 1 is fixed (known in advance by the network device), while the size of the CSI Part 2 is variable (may be unknown in advance by the network device). For example, the number of bits used to indicate the report index is fixed (e.g., configured by the network device or predefined, such as the $\left⌈{log}_{2} X\right⌉$ or $\left⌈{log}_{2} Y\right⌉$ mentioned above). The network device may first demodulate and decode the CSI Part 1, in order to obtain the report index. A corresponding event-triggered report configuration may be obtained using the report index. All configuration information may be obtained using the event-triggered report configuration, thus the M value (obtained according to the configuration information) and the bit width of the measurement resource index are known (the K value is known according to the configuration information, therefore, the bit width $\left⌈{log}_{2} K\right⌉$ is known). The network device may obtain the size of the CSI Part 2 according to the M value and the bit width of the measurement resource index, and thus may demodulate and decode the CSI Part 2. The network device may correctly interpret the measurement resource index according to the event-triggered report configuration. At this point, the network device has completed demodulation and decoding of the event-triggered report.

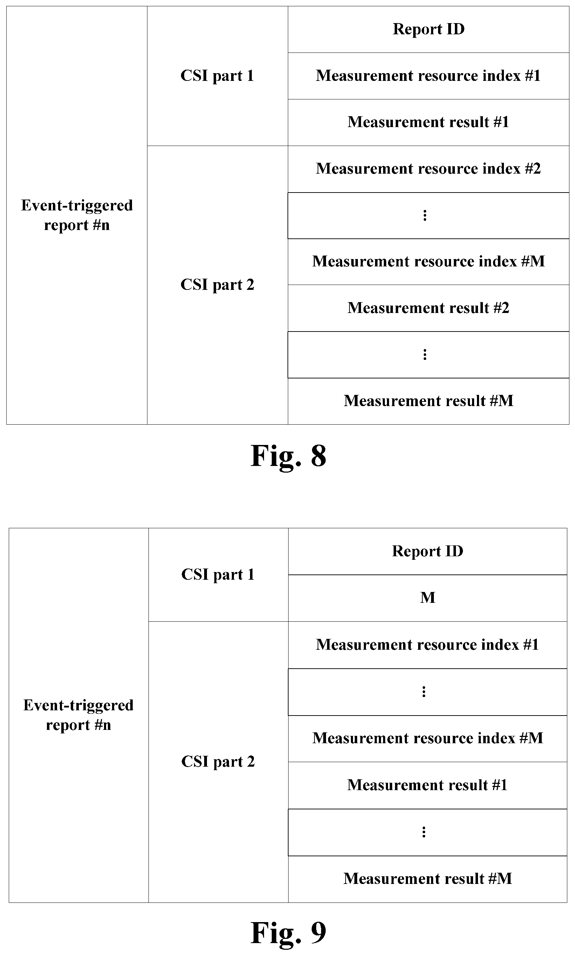

FIG. 8 is another example diagram illustrating the event-triggered report according to the embodiments of the present disclosure. For example, as illustrated in the FIG. 8, the FIG. 8 differs from the FIG. 7 in that a report index, M1 (M1 ≤ M) measurement resource indexes, and M1 measurement results are included in a CSI part 1, while M-M1 measurement resource indexes and M-M1 measurement results are included in a CSI part 2. M1 is a fixed value. The FIG. 8 assumes that M1 = 1.

The CSI Part 2 has a lower priority or importance than the CSI Part 1. Considering that the CSI Part 2 may be discarded i.e., not transmitted in some cases due to the lower priority, a fixed number of measurement resource indexes and measurement results are included in the CSI Part 1. For example, the best measurement result and corresponding measurement resource indexes thereof are included in the CSI Part 1. Thus, the network device is still able to obtain important measurement results and measurement resource indexes using the CSI Part 1, even if the CSI Part 2 is discarded.

In some embodiments, the number of the first set of measurement resource indexes or the number of the first set of measurement results is configured per terminal equipment, or the number of the first set of measurement resource indexes or the number of the first set of measurement results is predefined.

For example, as illustrated in the FIG. 8, M1 measurement resource indexes and M1 measurement results are included in the CSI Part 1, M1 for different event-triggered reports is the same. For example, the value of M1 is configured by the network device or predefined. Thus, the network device knows the size of the CSI Part 1 in advance and thus is able to demodulate and decode the CSI Part 1. For example, the M1 is configured per terminal equipment, or the M1 is predefined as 1. For example, the terminal equipment includes M1 best measurement results and corresponding measurement resource indexes thereof in the CSI Part 1.

In some embodiments, the CSI part 1 further includes the number of the measurement resource indexes and/or the number of the measurement results.

FIG. 9 is another example diagram illustrating the event-triggered report according to the embodiments of the present disclosure. For example, as illustrated in the FIG. 9, the FIG. 9 differs from the FIG. 7 in that M is included in a CSI Part 1 and determined by a terminal equipment independently. Since the terminal equipment determines the M independently and the M affects a size of UCI, a network device is unable to know the size of the UCI in advance, or is unable to know the M according to the report index. This problem may be solved by including the M in the CSI Part 1.

For example, the number of bits used to indicate M is fixed (configured by a network device or predefined). The network device first demodulates and decodes a CSI part 1, in order to obtain the M. The network device may obtain a size of a CSI part 2 according to a value of the M, and thus may demodulate and decode the CSI part 2.

In some embodiments, when an event-triggered report is transmitted and/or an event-triggered report is cancelled, the scheduling request is cancelled and/or a timer (sr-ProhibitTimer) associated with the scheduling request is stopped.

For example, if a SR is triggered by an event-triggered report, a terminal equipment cancels the SR if certain conditions are met. In addition, if a sr-ProhibitTimer associated with the SR is running, the terminal equipment stops the sr-ProhibitTimer. When the sr-ProhibitTimer is running, the terminal equipment does not transmit the SR associated therewith.

For example, met conditions may involve that an event-triggered report is transmitted, and/or that an event-triggered report is cancelled. A terminal equipment no longer transmits a SR, after the event-triggered report is transmitted; or a terminal equipment no longer transmits a SR, if transmission of the event-triggered report is cancelled.

In some embodiments, the event-triggered report is an event-triggered CSI report, or the event-triggered report is an event-triggered LTM CSI report.

For example, an event-triggered report may be an event-triggered CSI report for purposes of non-cell handover; or an event-triggered report may be an event-triggered LTM CSI report for purposes of cell handover.

As can be seen from the above embodiments, after an event occurs, a terminal equipment transmits a SR (or PRACH), then receives DCI, and transmits an event-triggered report on a PUSCH or a PUCCH scheduled by the DCI. A plurality of event-triggered reports are associated with one SR (or RACH) configuration, and the DCI indicates that the terminal equipment transmits the event-triggered report. The event-triggered report includes at least one of a report index, a measurement resource index, a measurement result, the number of measurement resource indexes, the number of measurement results, or a measurement resource set index.

The above embodiments only illustrate the present disclosure. However, the present disclosure is not limited thereto, and appropriate variants may be made on the basis of the above embodiments. For example, the above embodiments may be used alone, or one or more of the above embodiments may be combined together.

In view of the embodiments of the present disclosure, a terminal equipment may be able to quickly transmit an event-triggered report after an event occurs, therefore, timeliness of reporting is improved and reporting overhead is reduced.

### Embodiments of a Second Aspect

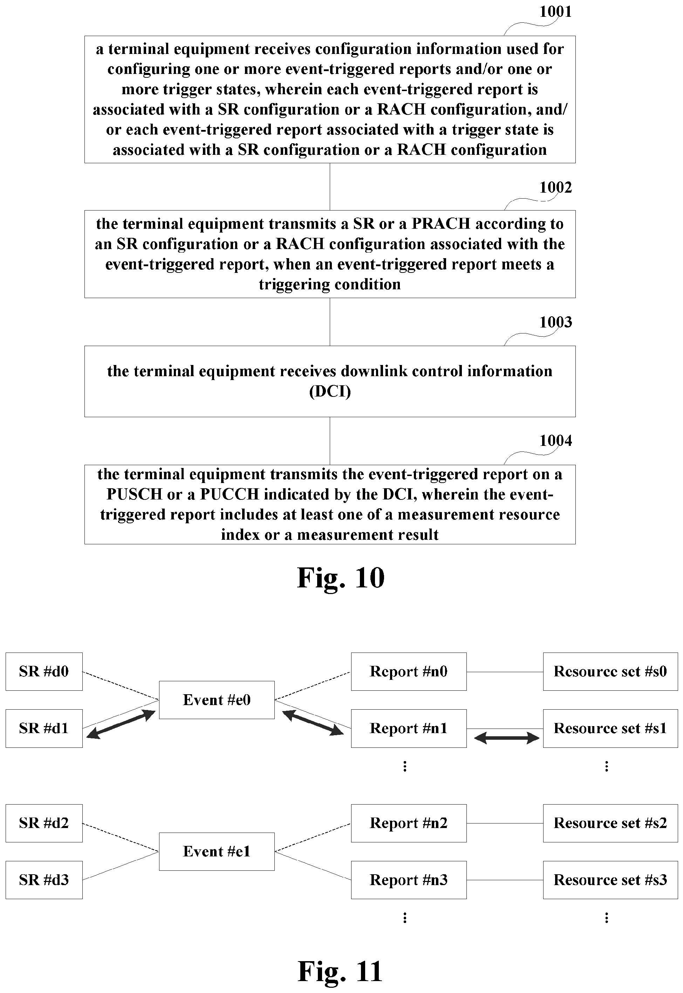

Embodiments of the present disclosure provide an information reporting method, and description of the same contents as those of the embodiments of the first aspect is omitted. FIG. 10 is a schematic diagram illustrating an information reporting method according to the embodiments of the present disclosure, as illustrated in the FIG. 10, the method includes:
1001: a terminal equipment receives configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration;
1002: the terminal equipment transmits a scheduling request or a PRACH according to a scheduling request configuration or a RACH configuration associated with the event-triggered report, when an event-triggered report meets a triggering condition;
1003: the terminal equipment receives downlink control information (DCI); and
1004: the terminal equipment transmits the event-triggered report on a PUSCH or a PUCCH indicated by the downlink control information (DCI), wherein the event-triggered report includes at least one of a measurement resource index or a measurement result.

It should be noted that the FIG. 10 only schematically illustrates the embodiments of the present disclosure, however, the present disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 10.

In some embodiments, the event-triggered report further includes at least one of an event index, the number of measurement resource indexes, the number of measurement results, or a measurement resource set index. The present disclosure is not limited thereto. For example, other information may also be involved.

FIG. 11 is an example diagram illustrating a relationship among a scheduling request configuration, events, and reports according to the embodiments of the present disclosure. As illustrated in the FIG. 11, for example, a terminal equipment is configured with a plurality of event-triggered reports, and each event-triggered report is associated with a SR configuration. When a triggering condition of an event-triggered report (such as a report #n1 in the FIG. 11) is met, the terminal equipment transmits a SR according to the SR configuration associated with the event-triggered report (SR configuration #d1 in the FIG. 11). Since the SR shares a one-to-one mapping relationship with the event-triggered report, a network device may know which event-triggered report the terminal equipment wants to transmit according to a received SR. For example, the above association relationship may be achieved by configuring the SR configuration per event-triggered report. For example, different event-triggered report configurations (Event-Triggered-CSI-ReportConfig) in the Table 2 are associated with different SchedulingRequestIds. For example, "a SR configuration" may be replaced with "a SR resource", such that each event-triggered report is associated with an SR resource, and the SR resource may include at least one of a time-domain resource, a frequency-domain resource, a sequence, or a cyclic prefix.

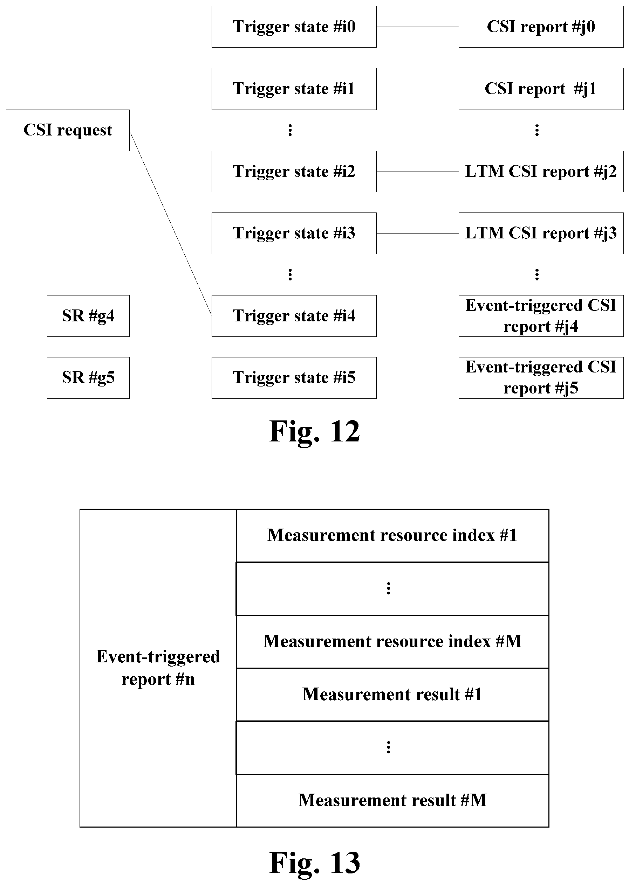

FIG. 12 is an example diagram illustrating a relationship between a CSI request and a trigger state according to the embodiments of the present disclosure. For example, as illustrated in the FIG. 12, a terminal equipment is configured with one or more trigger states, each trigger state is associated with a report. The report may be an aperiodic CSI report, an aperiodic LTM CSI report, or an event-triggered report. An event-triggered report associated with each trigger state is associated with a SR configuration.

For example, if a terminal equipment is configured with P event-triggered reports, however, only P1 (P1 < P) event-triggered reports therein are associated with a trigger state, only the P1 event-triggered reports are associated with a SR configuration, this is because only event-triggered reports associated with a trigger state may be transmitted by DCI triggering. Thus, only P1 SR configurations instead of P SR configurations are required. One SR configuration corresponds to a set of reserved SR resources, thus SR resource overhead may be reduced. For example, "a SR configuration" may be replaced with "a SR resource", such that each event-triggered report is associated with an SR resource, and the SR resource may include at least one of a time-domain resource, a frequency-domain resource, a sequence, or a cyclic prefix.

Table 6 shows an example of an RRC IE, which shows a trigger state associated with an aperiodic CSI report. The trigger state may be associated with an event-triggered report in a manner shown in the Table 6, that is, an event-triggered report configuration ID uses a newly defined report configuration ID.

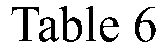

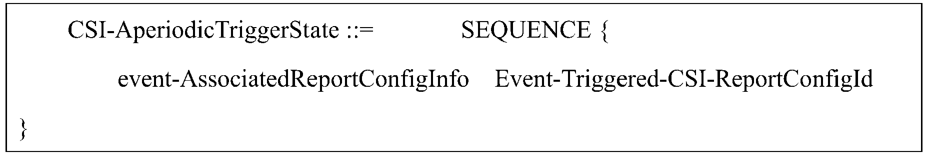

Table 7 shows another example of the RRC IE, which shows a trigger state associated with an aperiodic LTM CSI report. The trigger state may be associated with an event-triggered report in a manner shown in the Table 7, that is, an event-triggered report configuration ID reuses an existing report configuration ID.

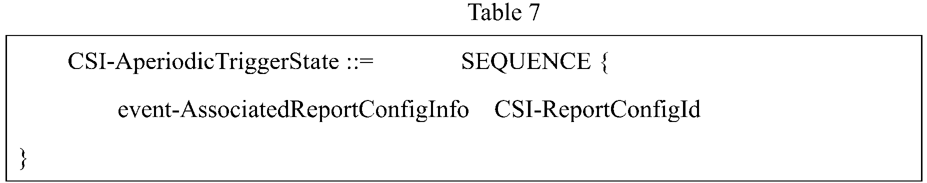

FIG. 13 is an example diagram illustrating an event-triggered report according to the embodiments of the present disclosure. For example, since a network device may determine which event-triggered report a terminal equipment wants to transmit according to a received SR, the event-triggered report may not include a report index. As illustrated in the FIG. 13, the event-triggered report includes a measurement resource index and a measurement result, but does not include the report index. Regarding an event-triggered report format (i.e., content included in the event-triggered report), reference may be made to the aforementioned event-triggered report format for content other than the report index.

In some embodiments, the event-triggered report is transmitted on the PUSCH or the PUCCH via uplink control information (UCI), or the event-triggered report is transmitted on the PUSCH via a MAC-CE.

For example, an event-triggered report as UCI is transmitted on a PUSCH, and a terminal equipment may use an existing UCI multiplexing method to transmit the UCI via the PUSCH. The PUSCH may carry an UL-SCH (for example, corresponding to a case where an UL-SCH indicator field in DCI indicates "1"), or not carry an UL-SCH (for example, corresponding to a case where an UL-SCH indicator field in DCI indicates "0").

In some embodiments, the terminal equipment determines to transmit the event-triggered report according to at least one of a field included in the downlink control information (DCI), a format of the downlink control information (DCI), or information indicated by the downlink control information (DCI).

For example, after receiving DCI, a terminal equipment needs to determine whether the DCI triggers an event-triggered report and which event-triggered report is triggered. The terminal equipment may make determinations thereon according to at least one of a field included in the DCI, a DCI format, or information indicated by the DCI. For example, a field in the DCI indicates that a specific event-triggered report is triggered. For example, the DCI indicates one information among a plurality of information configured in RRC signaling, and the information indicates that a specific event-triggered report is triggered.

In some embodiments, a CSI request field in the downlink control information (DCI) indicates a trigger state associated with an event-triggered report, and the terminal equipment determines to transmit the event-triggered report associated with the trigger state according to the trigger state.

For example, as illustrated in the FIG. 12, a CSI request field in DCI indicates a trigger state (CSI-AperiodicTriggerState), and a trigger state may be associated with an aperiodic CSI report, an aperiodic LTM CSI report, or an event-triggered report. Since the trigger state is associated with a report configuration ID, a terminal equipment is able to determine whether the DCI triggers an event-triggered report and which event-triggered report is triggered according to the trigger state indicated by the CSI request field. Since the CSI request field in the DCI is reused, the DCI may trigger both a legacy report and an event-triggered report.

For example, a terminal equipment is configured with dedicated trigger states of one or more event-triggered events (Event-CSI-TriggerState, referred to as event-triggered states). An event-triggered state is only able to be associated with an event-triggered report. If a DCI field indicates an event-triggered state, the terminal equipment transmits the event-triggered report associated with the event-triggered state. In this case, the DCI field triggers one of a plurality of event-triggered reports.

In some embodiments, the number of measurement resource indexes or the number of measurement results included in different event-triggered reports is the same.

For example, each event-triggered report includes M measurement resource indexes and M measurement results. The same M value facilitates demodulation and decoding for a network device. For example, when an event-triggered report is used as UCI, UCI sizes of different event-triggered reports are the same, and the network device may demodulate and decode the UCI in a unified manner. When the event-triggered report is used as UCI, the event-triggered report may use the report format illustrated in the FIG. 13.

In some embodiments, the number of the measurement resource indexes or the number of the measurement results is configured per terminal equipment, or the number of the measurement resource indexes or the number of the measurement results is predefined.

For example, each event-triggered report includes M measurement resource indexes and M measurement results, where M is configured per UE or predefined. Therefore, when an event-triggered report is used as UCI, a network device knows a size of the UCI in advance and may thus demodulate and decode the UCI.

In some embodiments, the number of measurement resource indexes or the number of measurement results included in different event-triggered reports is independent.

For example, one event-triggered report includes M measurement resource indexes and M measurement results, and M values for different event-triggered reports are independent. In other words, the M values for different event-triggered reports may be the same or different. The independent M values facilitate more flexible event-triggered reporting. For example, the number of preferred measurement results included in different event-triggered reports may not be the same.

In some embodiments, the number of the measurement resource indexes or the number of the measurement results is configured per event-triggered report or is determined by the terminal equipment.

For example, an event-triggered report includes M measurement resource indexes and M measurement results, where M is configured per event-triggered report. For example, M is configured in an event-triggered report configuration.

In some embodiments, the event-triggered report includes a CSI part 1 and a CSI part 2; the CSI part 1 includes the number of the measurement resource indexes or the number of the measurement results, and the CSI part 2 includes at least one of the measurement resource index or the measurement result.

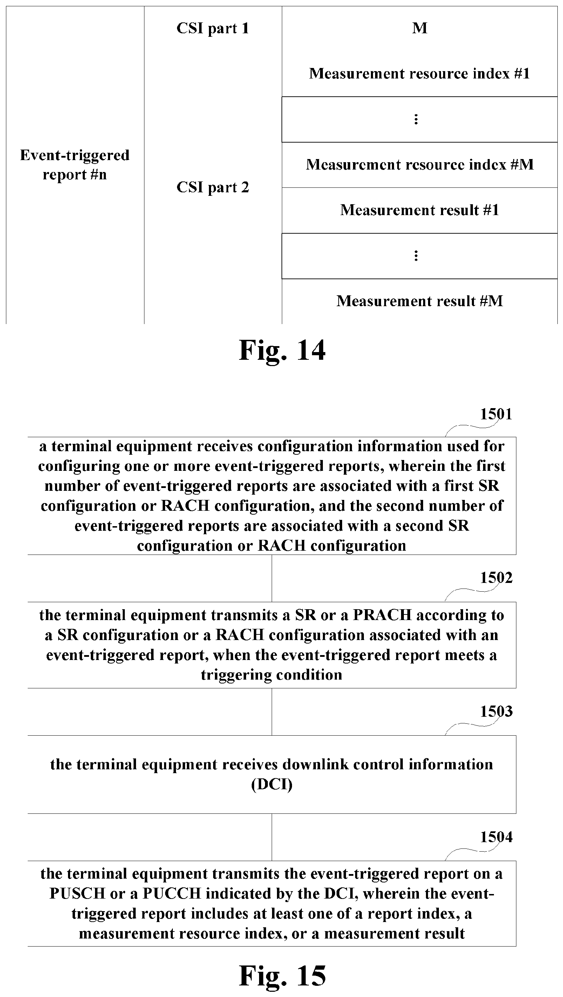

FIG. 14 is another example diagram illustrating the event-triggered report according to the embodiments of the present disclosure. For example, as illustrated in the FIG. 14, an event-triggered report is used as UCI, an M value is included in a CSI part 1, M measurement resource indexes and M measurement results are included in a CSI part 2, where M is determined by a terminal equipment independently. The event-triggered report does not include a report index.

In some embodiments, when an event-triggered report is transmitted and/or an event-triggered report is cancelled, the scheduling request is cancelled and/or a timer (sr-ProhibitTimer) associated with the scheduling request is stopped.

For example, if a SR is triggered by an event-triggered report, a terminal equipment cancels the SR if certain conditions are met. In addition, if a sr-ProhibitTimer associated with the SR is running, the terminal equipment stops the sr-ProhibitTimer. When the sr-ProhibitTimer is running, the terminal equipment does not transmit the SR associated therewith.

For example, met conditions may involve that an event-triggered report is transmitted, and/or that an event-triggered report is cancelled. A terminal equipment no longer transmits a SR, after the event-triggered report is transmitted; or a terminal equipment no longer transmits a SR, if transmission of the event-triggered report is cancelled.

In some embodiments, the event-triggered report is an event-triggered CSI report, or the event-triggered report is an event-triggered LTM CSI report.

For example, an event-triggered report may be an event-triggered CSI report for purposes of non-cell handover; or an event-triggered report may be an event-triggered LTM CSI report for purposes of cell handover.

As can be seen from the above embodiments, after an event occurs, a terminal equipment transmits a SR (or PRACH), then receives DCI, and transmits an event-triggered report on a PUSCH or a PUCCH scheduled by the DCI. A plurality of event-triggered reports are associated with a plurality of SR (or RACH) configurations, and the DCI indicates the terminal equipment which event-triggered report to transmit. The event-triggered report includes at least one of a measurement resource index, a measurement result, the number of measurement resource indexes, the number of measurement results, or a measurement resource set index.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

In view of the embodiments of the present disclosure, a terminal equipment may be able to quickly transmit an event-triggered report after an event occurs, therefore, timeliness of reporting is improved and reporting overhead is reduced.

### Embodiments of a Third Aspect

Embodiments of the present disclosure provide an information reporting method, and description of the same contents as those of the embodiments of the first and second aspects is omitted. FIG. 15 is a schematic diagram illustrating an information reporting method according to the embodiments of the present disclosure, as illustrated in the FIG. 15, the method includes:
1501: a terminal equipment receives configuration information used for configuring one or more event-triggered reports, wherein a first number of event-triggered reports are associated with a first scheduling request configuration or RACH configuration, and a second number of event-triggered reports are associated with a second scheduling request configuration or RACH configuration;
1502: the terminal equipment transmits a scheduling request or a PRACH according to a scheduling request configuration or a RACH configuration associated with an event-triggered report, when the event-triggered report meets a triggering condition;
1503: the terminal equipment receives downlink control information (DCI); and
1504: the terminal equipment transmits the event-triggered report on a PUSCH or a PUCCH indicated by the downlink control information (DCI), wherein the event-triggered report includes at least one of a report index, a measurement resource index, or a measurement result.

It should be noted that the FIG. 15 only schematically illustrates the embodiments of the present disclosure, however, the present disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 15.

In some embodiments, the event-triggered report further includes at least one of an event index, the number of measurement resource indexes, the number of measurement results, or a measurement resource set index. The present disclosure is not limited thereto. For example, other information may also be involved.

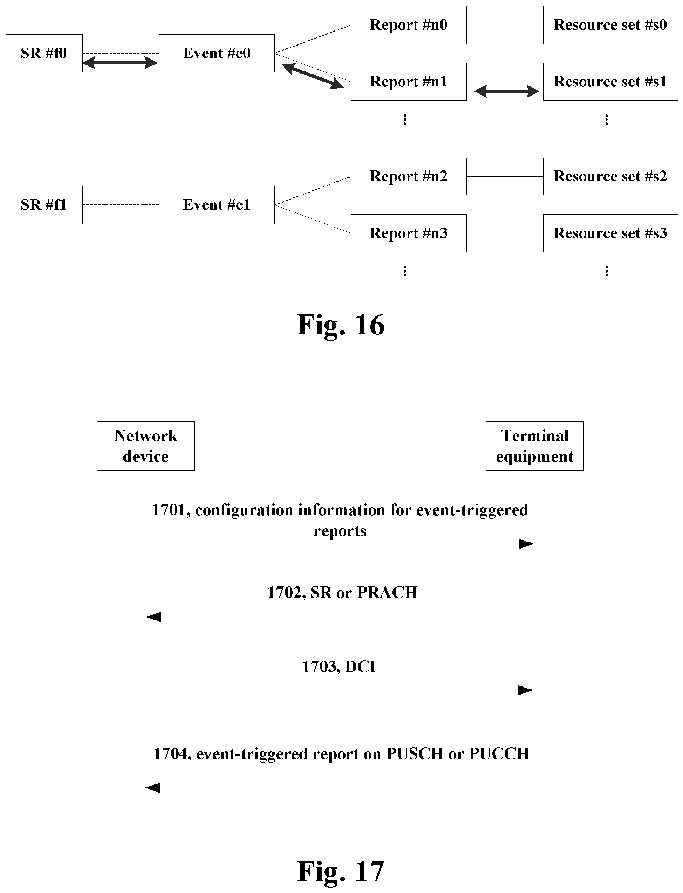

FIG. 16 is an example diagram illustrating a relationship among a scheduling request configuration, events, and reports according to the embodiments of the present disclosure. As illustrated in the FIG. 16, for example, event-triggered reports #n0 and #n1 are associated with a SR configuration #f0, while event-triggered reports #n2 and #n3 are associated with a SR configuration #f1. Thus, SR resource overhead may be reduced. Since a plurality of event-triggered reports share a single SR configuration, a network device is unable to determine which event-triggered report should be triggered according to a received SR. Therefore, the event-triggered reports need to include a report index.

For example, a terminal equipment may reuse the embodiments of the first aspect within the scope of a plurality of event-triggered reports associated with a SR configuration #f0 in the FIG. 16, this is because an upper half of the FIG. 16 also shows a situation where a plurality of event-triggered reports share a same SR configuration, the embodiments of the first aspect may be reused, and will not be described herein again.

In some embodiments, the report index is an index within the first number of event-triggered reports, or the report index is an index within the second number of event-triggered reports.

For example, as illustrated in the FIG. 16, after receiving a SR, a network device only needs to further distinguish each event-triggered report within the scope of a plurality of event-triggered reports associated with the SR. Therefore, a report index may be an index within the scope of the plurality of event-triggered reports associated with one SR. The number of bits (bit width) used to indicate the report index is fixed. If bit widths of the report index determined according to different SRs are different, a maximum bit width may be used as the bit width of the report index.

In some embodiments, the first number of event-triggered reports are associated with a first event, and the second number of event-triggered reports are associated with a second event.

For example, as illustrated in the FIG. 16, event-triggered reports #n0 and #n1 are associated with an event #e0 and a SR configuration #f0, while event-triggered reports #n2 and #n3 are associated with an event #e1 and a SR configuration #f1. Therefore, the SR configuration #f0 is associated with the event #e0, while the SR configuration #f1 is associated with the event #e0. For example, the association relationship may be achieved by configuring a SR configuration per event.

As can be seen from the above embodiments, after an event occurs, a terminal equipment transmits a SR (or PRACH), then receives DCI, and transmits an event-triggered report on a PUSCH or a PUCCH scheduled by the DCI. A plurality of event-triggered reports are associated with one or more SR (or RACH) configurations, and the DCI indicates that the terminal equipment transmits an event-triggered report. The event-triggered report includes at least one of a report index, a measurement resource index, a measurement result, the number of measurement resource indexes, the number of measurement results, or a measurement resource set index.

The above embodiments only illustrate the embodiments of the present disclosure. However, the present disclosure is not limited thereto, and appropriate variants may be made on the basis of the above embodiments. For example, the above embodiments may be used alone, or one or more of the above embodiments may be combined together.

In view of the embodiments of the present disclosure, a terminal equipment may be able to quickly transmit an event-triggered report after an event occurs, therefore, timeliness of reporting is improved and reporting overhead is reduced.

### Embodiments of a Fourth Aspect

Embodiments of the present disclosure provide an information receiving method described from a network device side. Embodiments of a fourth aspect may be combined with the embodiments of the first to third aspects, and the same contents as the embodiments of the first to third aspects will not be described again.

FIG. 17 is a schematic diagram illustrating an information receiving method according to the embodiments of the present disclosure. As illustrated in the FIG. 17, the method includes:
1701: a network device transmits configuration information used for configuring one or more event-triggered reports;
1702: the network device receives a scheduling request or a PRACH;
1703: the network device transmits downlink control information (DCI); and
1704: the network device receives an event-triggered report transmitted on a PUSCH or a PUCCH indicated by the downlink control information (DCI).

It should be noted that the FIG. 17 only schematically illustrates the embodiments of the present disclosure, however, the present disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 17.

In some embodiments, the one or more event-triggered reports are associated with a scheduling request configuration or a RACH configuration; a terminal equipment transmits a scheduling request or a PRACH, in a case where an event-triggered report meets a triggering condition; wherein the event-triggered report includes at least one of a report index, a measurement resource index, or a measurement result.

In some embodiments, each event-triggered report is associated with a scheduling request configuration or a RACH configuration, and/or each event-triggered report associated with a trigger state is associated with a scheduling request configuration or a RACH configuration; in a case where an event-triggered report meets a triggering condition, a terminal equipment transmits a scheduling request or a PRACH according to a scheduling request configuration or a RACH configuration associated with the event-triggered report, wherein the event-triggered report includes at least one of a measurement resource index or a measurement result.

In some embodiments, a first number of event-triggered reports are associated with a first scheduling request configuration or RACH configuration, and a second number of event-triggered reports are associated with a second scheduling request configuration or RACH configuration; in a case where an event-triggered report meets a triggering condition, a terminal equipment transmits a scheduling request or a PRACH according to a scheduling request configuration or a RACH configuration associated with the event-triggered report, wherein the event-triggered report includes at least one of a report index, a measurement resource index, or a measurement result.

The above embodiments only illustrate the present disclosure. However, the present disclosure is not limited thereto, and appropriate variants may be made on the basis of the above embodiments. For example, the above embodiments may be used alone, or one or more of the above embodiments may be combined together.

In view of the embodiments of the present disclosure, a terminal equipment may be able to quickly transmit an event-triggered report after an event occurs, therefore, timeliness of reporting is improved and reporting overhead is reduced.

### Embodiments of a Fifth Aspect

Embodiments of the present disclosure provide an information reporting apparatus, which may be, for example, a terminal equipment, or may be one or more components or assemblies configured in the terminal equipment, and the same contents as those of the embodiments of the first to third aspects will not be described again.

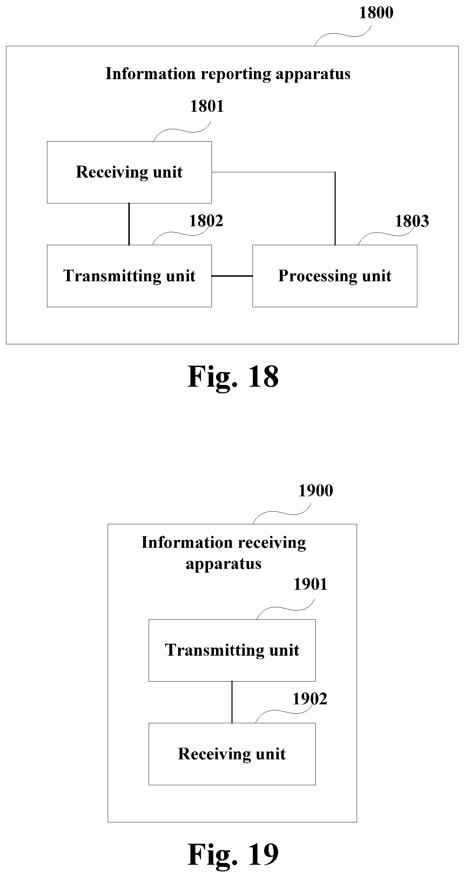

FIG. 18 is a schematic diagram illustrating an information reporting apparatus according to the embodiments of the present disclosure. As illustrated in the FIG. 18, an information reporting apparatus 1800 includes: a receiving unit 1801 and a transmitting unit 1802.

In some embodiments, the receiving unit 1801 receives configuration information used for configuring one or more event-triggered reports, and the one or more event-triggered reports are associated with a scheduling request configuration or a RACH configuration; and the transmitting unit 1802 transmits a scheduling request or a PRACH when an event-triggered report meets a triggering condition; the receiving unit 1802 also receives downlink control information (DCI); and the transmitting unit 1802 also transmits the event-triggered report on a PUSCH or a PUCCH indicated by the downlink control information (DCI), wherein the event-triggered report includes at least one of a report index, a measurement resource index, or a measurement result.

In some embodiments, the event-triggered report further includes at least one of an event index, the number of measurement resource indexes, the number of measurement results, or a measurement resource set index.

In some embodiments, the event-triggered report is transmitted on the PUSCH or the PUCCH via uplink control information (UCI), or the event-triggered report is transmitted on the PUSCH via a MAC-CE.

In some embodiments, the report index is an event-triggered report configuration ID, or the report index is an ID corresponding to configured one or more event-triggered reports.

In some embodiments, as illustrated in the FIG. 18, the apparatus further includes:
a processing unit 1803 configured to determine to transmit the event-triggered report according to at least one of a field included in the downlink control information (DCI), a format of the downlink control information (DCI), or information indicated by the downlink control information (DCI).

In some embodiments, a CSI request field in the downlink control information (DCI) indicates a dedicated trigger state of an event-triggered report, and the processing unit determines to transmit the event-triggered report according to the trigger state.

In some embodiments, the number of measurement resource indexes or the number of measurement results included in different event-triggered reports is the same.

In some embodiments, the number of the measurement resource indexes or the number of the measurement results is configured per terminal equipment, or the number of the measurement resource indexes or the number of the measurement results is predefined.

In some embodiments, the number of measurement resource indexes or the number of measurement results included in different event-triggered reports are independent.

In some embodiments, the number of the measurement resource indexes or the number of the measurement results is configured per event-triggered report or is determined by a terminal equipment.

In some embodiments, the event-triggered report includes a first part of CSI (CSI part 1) and a second part of CSI (CSI part 2); the first part of CSI (CSI part 1) includes at least one of a report index, a first set of measurement resource indexes, or a first set of measurement results, and the second part of CSI (CSI part 2) includes at least one of a second set of measurement resource indexes or a second set of measurement results.

In some embodiments, the number of the first set of measurement resource indexes or the number of the first set of measurement results is configured per terminal equipment, or the number of the first set of measurement resource indexes or the number of the first set of measurement results is predefined.

In some embodiments, the first part of CSI (CSI part 1) further includes the number of the measurement resource indexes and/or the number of the measurement results.

In some embodiments, when an event-triggered report is transmitted and/or an event-triggered report is cancelled, the scheduling request is cancelled and/or a timer (sr-ProhibitTimer) associated with the scheduling request is stopped.

In some embodiments, the event-triggered report is an event-triggered CSI report, or the event-triggered report is an event-triggered LTM CSI report.

In some embodiments, the receiving unit 1801 receives configuration information used for configuring one or more event-triggered reports and/or one or more trigger states, wherein each event-triggered report is associated with a scheduling request configuration or a RACH configuration, and/or an event-triggered report associated with each trigger state is associated with a scheduling request configuration or a RACH configuration; the transmitting unit 1802 transmits a scheduling request or a PRACH according to a scheduling request configuration or a RACH configuration associated with the event-triggered report when an event-triggered report meets a triggering condition; the receiving unit 1801 also receives downlink control information (DCI); and the transmitting unit 1802 also transmits the event-triggered report on a PUSCH or a PUCCH indicated by the downlink control information (DCI), wherein the event-triggered report includes at least one of a measurement resource index or a measurement result.

In some embodiments, the receiving unit 1801 receives configuration information used for configuring one or more event-triggered reports, wherein a first number of event-triggered reports are associated with a first scheduling request configuration or RACH configuration, and a second number of event-triggered reports are associated with a second scheduling request configuration or RACH configuration; the transmitting unit 1802 transmits a scheduling request or a PRACH according to a scheduling request configuration or a RACH configuration associated with an event-triggered report when the event-triggered report meets a triggering condition; the receiving unit 1801 also receives downlink control information (DCI); and the transmitting unit 1802 also transmits the event-triggered report on a PUSCH or a PUCCH indicated by the downlink control information (DCI), wherein the event-triggered report includes at least one of a report index, a measurement resource index, or a measurement result.

It should be noted that the components or modules related to the present disclosure are only described above, however, the present disclosure is not limited thereto. The information reporting apparatus 1800 may also include other components or modules. Reference may be made to the related arts for specific content of these components or modules.

In addition, for the sake of simplicity, the FIG. 18 only exemplifies a connection relationship or a signal direction of components or modules, however, those skilled in the art should appreciate that the related arts such as bus connections may be adopted. The components or modules may be implemented by hardware facilities, such as a processor, a memory, a transmitter, and a receiver, which is not limited in the present disclosure.

In view of the embodiments of the present disclosure, a terminal equipment may be able to quickly transmit an event-triggered report after an event occurs, therefore, timeliness of reporting is improved and reporting overhead is reduced.

### Embodiments of a Sixth Aspect

Embodiments of the present disclosure provide an information receiving apparatus, which may be, for example, a network device, or may be one or more components or assemblies configured in the network device, and the same contents as those of the embodiments of the first to fourth aspects will not be described again.

FIG. 19 is a schematic diagram illustrating an information receiving apparatus according to the embodiments of the present disclosure. As illustrated in the FIG. 19, an information receiving apparatus 1900 includes a transmitting unit 1901 and a receiving unit 1902.

In some embodiments, the transmitting unit 1901 transmits configuration information used for configuring one or more event-triggered reports, and the one or more event-triggered reports are associated with a scheduling request configuration or a RACH configuration; and the receiving unit 1902 receives a scheduling request or a PRACH; the transmitting unit 1901 also transmits downlink control information (DCI); and the receiving unit 1902 also receives the event-triggered report transmitted on a PUSCH or a PUCCH indicated by the downlink control information (DCI); wherein the event-triggered report includes at least one of a report index, a measurement resource index, or a measurement result.

In some embodiments, the transmitting unit 1901 transmits configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration; the receiving unit 1902 receives a scheduling request or a PRACH; the transmitting unit 1901 also transmits downlink control information (DCI); and the receiving unit 1902 also receives the event-triggered report transmitted on a PUSCH or a PUCCH indicated by the downlink control information (DCI), wherein the event-triggered report includes at least one of a measurement resource index or a measurement result.

In some embodiments, the transmitting unit 1901 transmits configuration information used for configuring one or more event-triggered reports, wherein a first number of event-triggered reports are associated with a first scheduling request configuration or RACH configuration, and a second number of event-triggered reports are associated with a second scheduling request configuration or RACH configuration; the receiving unit 1902 receives a scheduling request or a PRACH; the transmitting unit 1901 also transmits downlink control information (DCI); and the receiving unit 1902 also receives the event-triggered report transmitted on a PUSCH or a PUCCH indicated by the downlink control information (DCI), wherein the event-triggered report includes at least one of a report index, a measurement resource index, or a measurement result.

It should be noted that the components or modules related to the present disclosure are only described above, however, the present disclosure is not limited thereto. The information receiving apparatus 1900 may also include other components or modules. Reference may be made to the related arts for specific content of these components or modules.

In addition, for the sake of simplicity, the FIG. 19 only exemplifies a connection relationship or a signal direction of components or modules, however, those skilled in the art should appreciate that the related arts such as bus connections may be adopted. The components or modules may be implemented by hardware facilities, such as a processor, a memory, a transmitter, and a receiver, which is not limited in the present disclosure.

In view of the embodiments of the present disclosure, a terminal equipment may be able to quickly transmit an event-triggered report after an event occurs, therefore, timeliness of reporting is improved and reporting overhead is reduced.

### Embodiments of a Seventh Aspect

Embodiments of the present disclosure also provide a communication system. Reference may be made to the FIG. 1. The same contents to those of the embodiments of the first to sixth aspects will not be described again.

In some embodiments, a communication system 100 may at least include:
a terminal equipment configured to receive configuration information used for configuring one or more event-triggered reports, the one or more event-triggered reports being associated with a scheduling request configuration or a RACH configuration; and transmit a scheduling request or a PRACH when an event-triggered report meets a triggering condition; receive downlink control information (DCI); and transmit the event-triggered report on a PUSCH or a PUCCH indicated by the downlink control information (DCI), wherein the event-triggered report includes at least one of a report index, a measurement resource index, or a measurement result; and
a network device configured to transmit configuration information used for configuring one or more event-triggered reports; receive a scheduling request or a PRACH; transmit downlink control information (DCI); and receive the event-triggered report.

In some embodiments, a communication system 100 may at least include:
a terminal equipment configured to receive configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration; transmit a scheduling request or a PRACH according to a scheduling request configuration or a RACH configuration associated with the event-triggered report when an event-triggered report meets a triggering condition; receive downlink control information (DCI); and transmit the event-triggered report on a PUSCH or a PUCCH indicated by the downlink control information (DCI), wherein the event-triggered report includes at least one of a measurement resource index or a measurement result; and
a network device configured to transmit configuration information used for configuring one or more event-triggered reports, receive a scheduling request or a PRACH, transmit downlink control information (DCI), and receive the event-triggered report.

In some embodiments, a communication system 100 may at least include:
a terminal equipment configured to receive configuration information used for configuring one or more event-triggered reports, wherein a first number of event-triggered reports are associated with a first scheduling request configuration or RACH configuration, and a second number of event-triggered reports are associated with a second scheduling request configuration or RACH configuration; transmit a scheduling request or a PRACH according to a scheduling request configuration or a RACH configuration associated with the event-triggered report when an event-triggered report meets a triggering condition; receive downlink control information (DCI); and transmit the event-triggered report on a PUSCH or a PUCCH indicated by the downlink control information (DCI); wherein the event-triggered report includes at least one of a report index, a measurement resource index, or a measurement result; and
a network device configured to transmit configuration information used for configuring one or more event-triggered reports, receive a scheduling request or a PRACH, transmit downlink control information (DCI), and receive the event-triggered report.

The embodiments of the present disclosure also provide a terminal equipment, however, the present disclosure is not limited thereto, and other devices may also be involved.

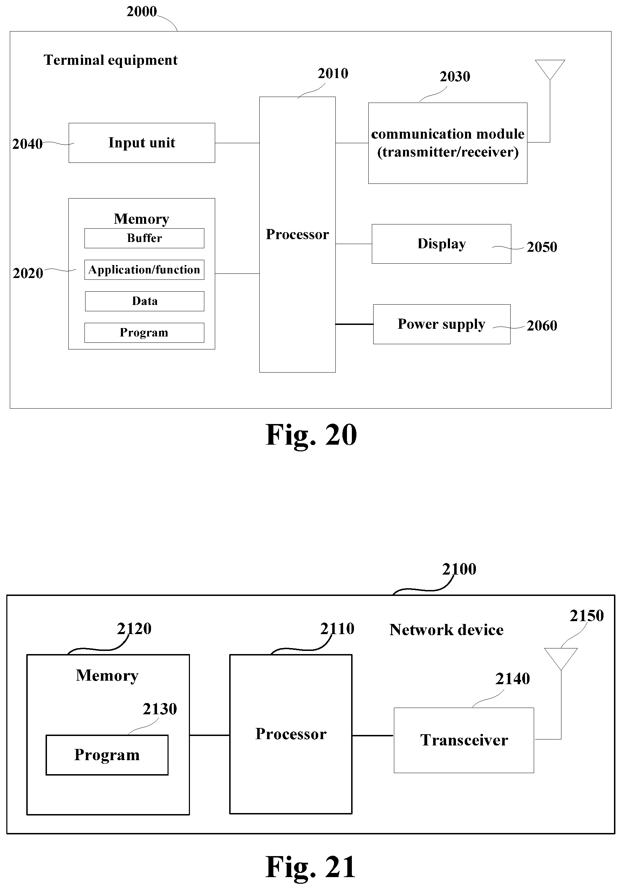

FIG. 20 is a schematic diagram illustrating a terminal equipment according to the embodiments of the present disclosure. As illustrated in the FIG. 20, a terminal equipment 2000 may include a processor 2010 and a memory 2020 that stores data and a program and is coupled to the processor 2010. It should be noted that the figure is exemplary; and other types of structures may also be used to supplement or replace this structure, in order to implement telecommunication functions or other functions.

For example, the processor 2010 may be configured to execute a program to implement the information reporting method according to the embodiments of the first aspect. For example, the processor 2010 may be configured to receive configuration information used for configuring one or more event-triggered reports, the one or more event-triggered reports being associated with a scheduling request configuration or a RACH configuration; and transmit a scheduling request or a PRACH when an event-triggered report meets a triggering condition; receive downlink control information (DCI); and transmit the event-triggered report on a PUSCH or a PUCCH indicated by the downlink control information (DCI), wherein the event-triggered report includes at least one of a report index, a measurement resource index, or a measurement result.

For example, the processor 2010 may be configured to execute a program to implement the information reporting method according to the embodiments of the second aspect. For example, the processor 2010 may be configured to receive configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration; transmit a scheduling request or a PRACH according to a scheduling request configuration or a RACH configuration associated with the event-triggered report when an event-triggered report meets a triggering condition; receive downlink control information (DCI); and transmit the event-triggered report on a PUSCH or a PUCCH indicated by the downlink control information (DCI), wherein the event-triggered report includes at least one of a measurement resource index or a measurement result.

For example, the processor 2010 may be configured to execute a program to implement the information reporting method according to the embodiments of the third aspect. For example, the processor 2010 may be configured to receive configuration information used for configuring one or more event-triggered reports; wherein a first number of event-triggered reports are associated with a first scheduling request configuration or RACH configuration, and a second number of event-triggered reports are associated with a second scheduling request configuration or RACH configuration; transmit a scheduling request or a PRACH according to a scheduling request configuration or a RACH configuration associated with the event-triggered report when an event-triggered report meets a triggering condition; receive downlink control information (DCI); and transmit the event-triggered report on a PUSCH or a PUCCH indicated by the downlink control information (DCI), wherein the event-triggered report includes at least one of a report index, a measurement resource index, or a measurement result.

As illustrated in the FIG. 20, the terminal equipment 2000 may further include: a communication module 2030, an input unit 2040, a display 2050, and a power supply 2060, wherein functions of the above components are similar to those in the relevant art and will not be described herein again. It should be noted that the terminal equipment 2000 does not necessarily include all the components illustrated in the FIG. 20, and the above components are not necessarily required. In addition, the terminal equipment 2000 may also include components not illustrated in the FIG. 20. Reference may be made to the relevant art.

The embodiments of the present disclosure further provide a network device, which may be, for example, a base station, however, the present disclosure is not limited thereto, and other network devices may also be involved.

FIG. 21 is a schematic diagram illustrating a composition of a network device according to the embodiments of the present disclosure. As illustrated in the FIG. 21, a network device 2100 may include: a processor 2110 (such as a central processing unit (CPU)) and a memory 2120 coupled to the processor 2110. The memory 2120 may store various data. In addition, the memory 2120 may store a program 2130 for information processing, and the program 2130 may be executed under the control of the processor 2110.

For example, the processor 2110 may be configured to execute a program to implement the information receiving method according to the embodiments of the first to third aspects. For example, the processor 2110 may be configured to transmit configuration information used for configuring one or more event-triggered reports, receive a scheduling request or a PRACH, transmit downlink control information (DCI), and receive the event-triggered report.

In addition, as illustrated in the FIG. 21, the network device 2100 may further include: a transceiver 2140 and an antenna 2150, wherein functions of the above components are similar to those in the relevant art and will not be described herein again. It should be noted that the network device 2100 does not necessarily include all the components illustrated in the FIG. 21. In addition, the network device 2100 may also include components not illustrated in the FIG. 21. Reference may be made to the relevant art.

The embodiments of the present disclosure also provide a computer program, wherein when the program is executed in a terminal equipment, the program enables the terminal equipment to perform the information reporting method according to the embodiments of the first to third aspects.

The embodiments of the present disclosure also provide a storage medium storing a computer program, wherein the computer program enables a terminal equipment to execute the information reporting method according to the embodiments of the first to third aspects.

The embodiments of the present disclosure also provide a computer program, wherein when the program is executed in a network device, the program enables the network device to perform the information receiving method according to the embodiments of the fourth aspect.

The embodiments of the present disclosure also provide a storage medium storing a computer program, wherein the computer program enables a network device to perform the information receiving method according to the embodiments of the fourth aspect.

The above apparatus and method of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a magnetic disk, a CD, a DVD, a flash memory, etc.

The method/apparatus described with reference to the embodiments of the present disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. These software modules may respectively correspond to the steps shown in the drawings. And these hardware modules, for example, may be carried out by firming these software modules by using a field programmable gate array (FPGA).

The software modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information to the memory medium; or the memory medium may be a component of the processor. The processor and the memory medium may be located in an ASIC. The software modules may be stored in a memory of a mobile terminal and may also be stored in a memory card of a pluggable mobile terminal. For example, if equipment (such as a mobile terminal) employs an MEGA-SIM card of a relatively large capacity or a flash memory device of a large capacity, the software modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in the present disclosure. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such descriptions are illustrative only, and not intended to limit the protection scope of the present disclosure. Various variants and amendments to the present disclosure may be made by those skilled in the art according to the spirit and principle of the present disclosure, and such variants and amendments also fall within the scope of the present disclosure.

As to implementations containing the above embodiments, supplements are further disclosed below:
1. An information reporting method, including:
   receiving, by a terminal equipment, configuration information used for configuring one or more event-triggered reports, the one or more event-triggered reports being associated with a scheduling request configuration or a RACH configuration; and
   transmitting, by the terminal equipment, a scheduling request or a PRACH when an event-triggered report meets a triggering condition;
   receiving, by the terminal equipment, downlink control information (DCI); and
   transmitting, by the terminal equipment, the event-triggered report on a PUSCH or a PUCCH indicated by the downlink control information (DCI), wherein the event-triggered report includes at least one of a report index, a measurement resource index, or a measurement result.
2. An information reporting method, including:
   receiving, by a terminal equipment, configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration;
   transmitting, by the terminal equipment, a scheduling request or a PRACH according to a scheduling request configuration or a RACH configuration associated with the event-triggered report when an event-triggered report meets a triggering condition;
   receiving, by the terminal equipment, downlink control information (DCI); and
   transmitting, by the terminal equipment, the event-triggered report on a PUSCH or a PUCCH indicated by the downlink control information (DCI), wherein the event-triggered report includes at least one of a measurement resource index or a measurement result.
3. An information reporting method, including:
   receiving, by a terminal equipment, configuration information used for configuring one or more event-triggered reports, wherein a first number of event-triggered reports are associated with a first scheduling request configuration or RACH configuration, and a second number of event-triggered reports are associated with a second scheduling request configuration or RACH configuration;
   transmitting, by the terminal equipment, a scheduling request or a PRACH according to a scheduling request configuration or a RACH configuration associated with the event-triggered report when an event-triggered report meets a triggering condition;
   receiving, by the terminal equipment, downlink control information (DCI); and
   transmitting, by the terminal equipment, the event-triggered report on a PUSCH or a PUCCH indicated by the downlink control information (DCI), wherein the event-triggered report includes at least one of a report index, a measurement resource index, or a measurement result.
4. An information receiving method, including:
   transmitting, by a network device, configuration information used for configuring one or more event-triggered reports, wherein the one or more event-triggered reports are associated with a scheduling request configuration or a RACH configuration; and
   receiving, by the network device, a scheduling request or a PRACH;
   transmitting, by the network device, downlink control information (DCI); and
   receiving, by the network device, the event-triggered report transmitted on a PUSCH or a PUCCH indicated by the downlink control information (DCI), wherein the event-triggered report includes at least one of a report index, a measurement resource index, or a measurement result.
5. An information receiving method, including:
   transmitting, by a network device, configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration;
   receiving, by the network device, a scheduling request or a PRACH;
   transmitting, by the network device, downlink control information (DCI); and
   receiving, by the network device, the event-triggered report transmitted on a PUSCH or a PUCCH indicated by the downlink control information (DCI), wherein the event-triggered report includes at least one of a measurement resource index or a measurement result.
6. An information receiving method, including:
   transmitting, by a network device, configuration information used for configuring one or more event-triggered reports, wherein a first number of event-triggered reports are associated with a first scheduling request configuration or RACH configuration, and a second number of event-triggered reports are associated with a second scheduling request configuration or RACH configuration;
   receiving, by the network device, a scheduling request or a PRACH;
   transmitting, by the network device, downlink control information (DCI); and
   receiving, by the network device, the event-triggered report transmitted on a PUSCH or a PUCCH indicated by the downlink control information (DCI), wherein the event-triggered report includes at least one of a report index, a measurement resource index, or a measurement result.
7. A terminal equipment, including: a memory and a processor, the memory configured to store a computer program, and the processor configured to execute the computer program to implement the information reporting method according to any one of supplements 1 to 3.
8. A network device, including: a memory and a processor, the memory configured to store a computer program and the processor configured to execute the computer program to implement the information receiving method according to any one of supplements 4 to 6.
9. A computer program product, at least including a computer program, wherein when the computer program is executed by a processor, a terminal equipment implements the information reporting method according to any one of supplements 1 to 3.
10. A computer program product, at least including a computer program, wherein when the computer program is executed by a processor, a network device implements the information receiving method according to any one of supplements 4 to 6.

## Claims

1. An information reporting apparatus, comprising:
a receiving unit configured to receive configuration information used for configuring one or more event-triggered reports, the one or more event-triggered reports being associated with a scheduling request configuration or a RACH configuration; and
a transmitting unit configured to transmit a scheduling request or a PRACH when an event-triggered report meets a triggering condition;
wherein the receiving unit is further configured to receive downlink control information; and
the transmitting unit is further configured to transmit the event-triggered report on a PUSCH or a PUCCH indicated by the downlink control information; and wherein the event-triggered report comprises at least one of a report index, a measurement resource index, or a measurement result.

2. The apparatus according to claim 1, wherein the event-triggered report further comprises at least one of an event index, the number of measurement resource indexes, the number of measurement results, or a measurement resource set index.

3. The apparatus according to claim 1, wherein the event-triggered report is transmitted on the PUSCH or the PUCCH via uplink control information, or the event-triggered report is transmitted on the PUSCH via a MAC-CE.

4. The apparatus according to claim 1, wherein the report index is an event-triggered report configuration ID, or the report index is an ID corresponding to configured one or more event-triggered reports.

5. The apparatus according to claim 1, wherein the apparatus further comprises:
a processing unit configured to determine to transmit the event-triggered report according to at least one of a field comprised in the downlink control information, a format of the downlink control information, or information indicated by the downlink control information.

6. The apparatus according to claim 5, wherein a CSI request field in the downlink control information indicates a dedicated trigger state of an event-triggered report, and the processing unit is configured to determine to transmit the event-triggered report according to the trigger state.

7. The apparatus according to claim 1, wherein the number of measurement resource indexes or the number of measurement results comprised in different event-triggered reports is the same.

8. The apparatus according to claim 7, wherein the number of the measurement resource indexes or the number of the measurement results is configured per terminal equipment, or the number of the measurement resource indexes or the number of the measurement results is predefined.

9. The apparatus according to claim 1, wherein the number of measurement resource indexes or the number of measurement results comprised in different event-triggered reports are independent.

10. The apparatus according to claim 9, wherein the number of the measurement resource indexes or the number of the measurement results is configured per event-triggered report or is determined by a terminal equipment.

11. The apparatus according to claim 1, wherein an event-triggered report comprises a first part of CSI (CSI part 1) and a second part of CSI (CSI part 2); and
the first part of CSI (CSI part 1) comprises at least one of a report index, a first set of measurement resource indexes, or a first set of measurement results; and the second part of CSI (CSI part 2) comprises at least one of a second set of measurement resource indexes or a second set of measurement results.

12. The apparatus according to claim 11, wherein the number of the first set of measurement resource indexes or the number of the first set of measurement results is configured per terminal equipment, or the number of the first set of measurement resource indexes or the number of the first set of measurement results is predefined.

13. The apparatus according to claim 11, wherein the first part of CSI (CSI part 1) further comprises the number of the measurement resource indexes and/or the number of the measurement results.

14. The apparatus according to claim 1, wherein in a case where an event-triggered report is transmitted and/or an event-triggered report is canceled, the scheduling request is canceled, and/or a timer associated with the scheduling request is stopped.

15. The apparatus according to claim 1, wherein an event-triggered report is an event-triggered CSI report, or the event-triggered report is an event-triggered LTM CSI report.

16. An information reporting apparatus, comprising:
a receiving unit configured to receive configuration information used for configuring one or more event-triggered reports and/or one or more trigger states, wherein each event-triggered report is associated with a scheduling request configuration or a RACH configuration, and/or each event-triggered report associated with a trigger state is associated with a scheduling request configuration or a RACH configuration;
a transmitting unit configured to transmit a scheduling request or a PRACH according to a scheduling request configuration or a RACH configuration associated with an event-triggered report when the event-triggered report meets a triggering condition;
wherein the receiving unit is further configured to receive downlink control information; and
the transmitting unit is further configured to transmit the event-triggered report on a PUSCH or a PUCCH indicated by the downlink control information; and wherein the event-triggered report comprises at least one of a measurement resource index or a measurement result.

17. The apparatus according to claim 16, wherein the apparatus further comprises:
a processing unit configured to determine to transmit the event-triggered report according to at least one of a field comprised in the downlink control information, a format of the downlink control information, or information indicated by the downlink control information.

18. The apparatus according to claim 17, wherein a CSI request field in the downlink control information indicates a trigger state associated with an event-triggered report, and the processing unit is configured to determine to transmit an event-triggered report associated with the trigger state according to the trigger state.

19. An information reporting apparatus, comprising:
a receiving unit configured to receive configuration information used for configuring one or more event-triggered reports, wherein a first number of event-triggered reports are associated with a first scheduling request configuration or RACH configuration, and a second number of event-triggered reports are associated with a second scheduling request configuration or RACH configuration;
a transmitting unit configured to transmit a scheduling request or a PRACH according to a scheduling request configuration or a RACH configuration associated with an event-triggered report when the event-triggered report meets a triggering condition;
wherein the receiving unit is further configured to receive downlink control information; and
the transmitting unit is further configured to transmit the event-triggered report on a PUSCH or a PUCCH indicated by the downlink control information; and wherein the event-triggered report comprises at least one of a report index, a measurement resource index, or a measurement result.

20. The apparatus according to claim 19, wherein the report index is an index within the first number of event-triggered reports, or the report index is an index within the second number of event-triggered reports; and/or
the first number of event-triggered reports are associated with a first event, and the second number of event-triggered reports are associated with a second event.
